Europäisches Patentamt

European Patent Office

Office européen des brevets

(19)

(11) EP 0 752 684 B1

(12) FASCICULE DE BREVET EUROPEEN

(45) Date de publication et mention
de la délivrance du brevet:
**02.05.2002 Bulletin 2002/18**

(51) Int Cl.⁷: **G06T 11/00**

(21) Numéro de dépôt: **96401448.4**

(22) Date de dépôt: **01.07.1996**

(54) **Procédé de reconstruction d'images tridimensionnelles sur un objet mobile ou déformable**

Dreidimensionales Bildrekonstruktionsverfahren eines bewegten oder verformbaren Objektes

Three dimensional image reconstruction method of a moving or deformable object

(84) Etats contractants désignés:
**DE GB NL**

(30) Priorité: **03.07.1995 FR 9508001**

(43) Date de publication de la demande:
**08.01.1997 Bulletin 1997/02**

(73) Titulaire: **COMMISSARIAT A L'ENERGIE
ATOMIQUE
75015 Paris Cédex 15 (FR)**

(72) Inventeurs:
• **De Murcia, Jérôme
38100 Grenoble (FR)**
• **Grangeat, Pierre
38330 Saint Ismier (FR)**

(74) Mandataire: **Ilgart, Jean-Christophe et al
c/o Société Brevatome,
3, rue du Docteur Lanceraux
75008 Paris (FR)**

(56) Documents cités:
**EP-A- 0 521 559          EP-A- 0 611 181
US-A- 4 729 019**

• **ANNALS OF BIOMEDICAL ENGINEERING, 1992,
USA, vol. 20, no. 2, ISSN 0090-6964, pages
149-165, XP000565998 AZHARI H ET AL: "A
conical model to describe the nonuniformity of
the left ventricular twisting motion"**

## Description

L'invention concerne un procédé de reconstruction d'images tridimensionnelles d'un objet mobile ou déformable.

L'imagerie tridimensionnelle permet de reconstruire les valeurs d'un paramètre particulier de l'objet étudié après avoir acquis une série de projections bidimensionnelles de cet objet. En tomographie aux rayons X, on recueille une information de densité car on obtient des résultats représentatifs de l'atténuation linéaire d'un rayonnement. En tomographie d'émission, c'est l'activité locale d'émission d'un corps marqueur qui est calculée. Les techniques de reconstruction d'images s'appliquent également dans le cas de transmission de neutrons ou d'émission de rayonnement $\gamma$ ou de positons. Historiquement, on a d'abord obtenu des coupes d'objets à l'aide d'une ligne de détecteur. Actuellement, l'imagerie tridimensionnelle consiste à utiliser les réseaux de détecteurs bidimensionnels pour en déduire le contenu du volume de l'objet.

Les problèmes sont beaucoup plus compliqués pour les images tridimensionnelles à cause du volume d'informations plus important à traiter et éventuellement de situations géométriques plus variées à considérer. Cependant, le problème à résoudre peut toujours être représenté par l'équation :

$$m = Hf+b \qquad (1)$$

où m désigne l'ensemble des mesures, f l'image à retrouver et H l'opérateur de projection ; b est le bruit de mesure. La reconstruction équivaut à l'inversion de cette équation, qui peut être résolue par deux familles de méthodes. Les méthodes analytiques consistent à exploiter une formule ou un algorithme dans lesquels les mesures sont combinées entre elles pour obtenir les valeurs aux points de l'image. Il existe de nombreux exemples, qui impliquent souvent, par exemple quand les capteurs sont focalisés vers un foyer unique en définissant un faisceau de détection conique, l'emploi d'une transformée de Radon de l'image, c'est-à-dire d'une fonction mathématique par laquelle on fait correspondre à chaque point de mesure la somme de la propriété mesurée sur tous les points d'un plan, appelé plan caractéristique, passant par ce point. Un des inventeurs est l'auteur de plusieurs demandes antérieures qui portent sur ces questions ; en particulier, il faut citer le brevet européen 0 292 402, qui constitue l'invention de base dans laquelle les caractéristiques et les propriétés des méthodes analytiques d'inversion et en particulier de la transformée de Radon sont rappelées. Une caractéristique de ces méthodes est que la discrétisation des résultats obtenus, pour pouvoir les associer aux points de l'image effectivement retenus par une discrétisation de l'objet, est produite à la fin des calculs.

On peut opposer les méthodes algébriques dans lesquelles la discrétisation de l'image est effectuée dès- le début, de sorte qu'on obtient un système d'équations où chaque mesure est exprimée en fonction de la contribution des points de l'image que traverse la direction de scrutation du détecteur responsable de la mesure. Le problème se ramène alors ouvertement à l'inversion de la matrice de projection H. Ces méthodes ne sont guère applicables quand les points sont nombreux, à cause de la taille des calculs, mais le problème est du moins toujours soluble, ce qui n'est pas toujours possible avec des méthodes analytiques dont les formules d'inversion peuvent être insuffisantes pour obtenir des résultats corrects. Un autre avantage des méthodes algébriques est que des informations connues à l'avance ou arbitraires peuvent être introduites beaucoup plus facilement. Si par exemple le contenu d'une partie de l'image est connu à l'avance, il est facile de l'introduire directement dans les équations, ce qui n'est pas le cas avec les méthodes analytiques. En pratique, l'inversion de la matrice est généralement menée suivant les techniques itératives habituelles dans l'analyse numérique.

Un domaine important de l'imagerie tridimensionnelle est la médecine et plus précisément l'examen d'organes vivants. Des mouvements du patient sont inévitables, quand on ne doit pas considérer un organe mobile comme le coeur dont les battements s'accompagnent à la fois de déplacements et de déformations. Le problème consiste à obtenir une image cohérente d'une série de mesures qui, dans les procédés ordinaires, sont accomplies successivement en déplaçant le réseau de capteurs autour de l'objet.

Une solution simple consiste à disposer un grand nombre de réseaux autour du patient, immobiles et qui prennent simultanément toutes les images utilisées pour la reconstruction. On élude alors le problème de mobilité de l'organe considéré, au prix d'un enchérissement considérable du dispositif utilisé.

Une autre solution fréquemment utilisée consiste à ne prendre des mesures qu'à des instants en phase pendant des cycles différents de l'organe, mais cela n'est possible que pour des phénomènes périodiques et nécessite une certaine précision de synchronisation, tout en allongeant la durée de prise des mesures. Enfin, on peut négliger purement et simplement les mouvements de l'organe et se contenter d'une image brouillée. Mais il est évident que cette façon de procéder possède comme les autres des inconvénients.

Citons en passant le brevet français n° 2 701 135 (ou EP 0 611 181) ayant un inventeur commun avec celui-ci et qui fournit un procédé de reconstruction d'images d'un objet évoluant d'une prise de projections à l'autre, dans lequel la loi d'évolution est connue au moins approximativement et est incorporée aux calculs pour donner finalement l'image de l'objet à un instant quelconque, c'est-à-dire qu'on résout le système d'équation m=Haf+b, ou A exprime les déplacements de l'objet, ou bien du sytème d'équation (1). C'est le même résultat qui est obtenu ici, mais dans des conditions différentes puisque la loi d'évolution est supposée inconnue et doit être retrouvée. De plus, le brevet antérieur est relatif aux méthodes algébriques d'inversion, alors que celui-ci ressortit aux méthodes analytiques. Et ici, plusieurs . jeux de projections sont pris à chaque état, à des incidences différentes autour de l'objet.

L'invention a pour objet d'obtenir des résultats satisfaisants d'imagerie sans complication de l'appareil, par un procédé impliquant, dans la réalisation choisie, des itérations améliorant un modèle de l'image en réduisant l'effet des dégradations liées aux conditions d'acquisition (bruitages, artéfacts, etc.). On reconstruit des images brutes (approchées car fortement bruitées en pratique) associées aux jeux de mesures près pour un même état de l'objet pour déterminer les déplacements et les déformations de l'objet pour à partir d'un état de référence et une évaluation de l'image de l'objet à cet état de référence est successivement amendée en y incluant les jeux de mesures et les déplacements et déformations aux états successifs.

Le procédé utilisé est défini à la revendication 1 ci-annexée.

Avantageusement, les variations de l'objet sont estimées par un champ de déplacement de points de modélisation de l'objet et par une évolution de la propriété respectant une relation de continuité de la propriété dans le temps ; elles peuvent être estimées par dés variations de contours de l'objet modélisés par des formes géométriques simple et de nature invariable ; de plus, si l'objet est sujet à la fois à des déformations et à des déplacements d'ensemble, on peut décider que les déformations et les déplacements d'ensemble sont évalués séparément avec des modélisations différentes de l'objet.

Un autre aspect de l'invention consiste à combiner les jeux de mesure en tenant compte de bruitages des mesures et de bruitages des évaluations des variations de l'objet.

Les figures suivantes seront désormais commentées pour une description détaillée d'une réalisation préférée de l'invention :

- la figure 1 illustre la prise des mesures,
- la figure 2 résume le procédé,
- la figure 3 illustre une première modélisation d'un myocarde,
- et les figures 4 et 5 illustrent une seconde modélisation d'un myocarde.

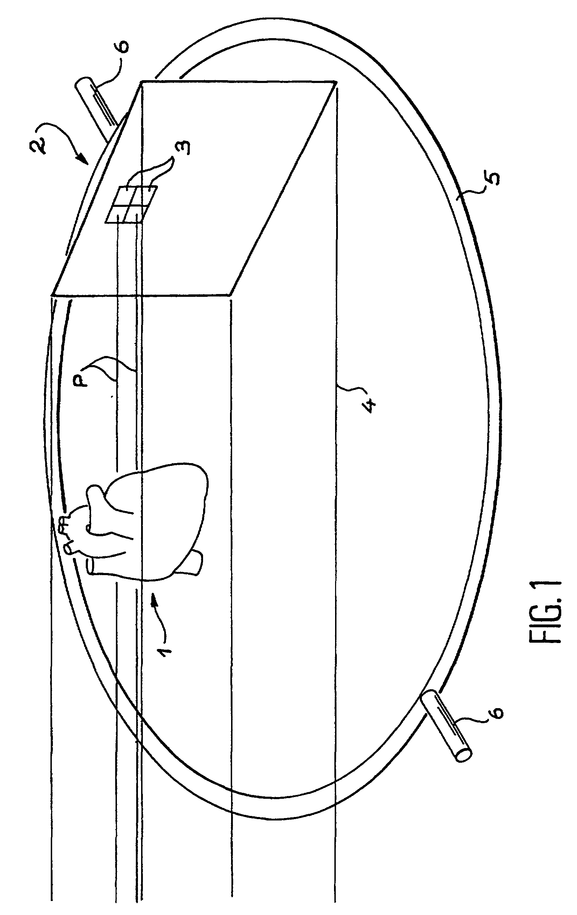

Sur la figure 1, on a illustré un objet d'étude fréquent, à savoir un coeur 1 et plus précisément son myocarde, qui a été alimenté par un liquide enrichi d'un traceur radioactif émetteur de photons. Les mesures sont prises par un réseau bidimensionnel 2 de capteurs 3, qui sont collimatés dans la même direction. Ils recueillent donc les photons émis sur des lignes de projection p respectives toutes parallèles entre elles. L'ensemble des projections s'étend dans un faisceau 4 de section constante dans lequel le coeur 1 est plongé. Le réseau bidimensionnel 2 est mobile autour du coeur 1 en glissant sur un rail 5 circulaire ou d'une autre forme, et qui peut d'ailleurs basculer autour de pivots 6 pour prendre une inclinaison quelconque. Les capteurs 3 ainsi placés à des incidences différentes prennent une série de jeux de mesures en étant réceptifs aux photons à certains instants, synchronisés sur un groupe déterminés d'états du coeur 1, ou de phases de son cycle. Les moyens de synchronisation, de commande des capteurs 3, de déplacement du réseau bidimensionnel 2 et de mémorisation des mesures, déjà connus, ne seront pas décrits ici car l'invention n'en propose pas de nouveau.

Le faisceau à section constante est usuel avec des procédés de détection de photons émis. L'invention est encore applicable à des procédés caractérisés par des faisceaux différents, coniques ou en éventail : seuls les coefficients de la matrice de projection R varient.

Voici une explication détaillée du procédé utilisé. La série de jeux de mesures successifs correspond à divers états de l'objet dont le numéro d'ordre est représenté par l'indice k (entier positif), où k=0 désigne l'état dans lequel l'image doit être reconstruite. L'objet peut être par exemple discrétisé en $M^3$ points formant un cube de M points de côté. L'image de l'objet à chaque état peut être représenté par un vecteur-colonne à $M^2$ composantes, l'opérateur de déformation de l'objet entre l'état 0 et l'état k par une matrice carrée de dimension $M^3$ notée $D_k$, et les mesures peuvent être représentées par un vecteur-colonne de projections $m_k$ à $LxM^2$ composantes. En effet, on suppose qu'il y a $M^2$ capteurs qui recueillent autant de projections passant par une ligne de M points de modélisation de l'objet et que L jeux de mesures ont pu être pris pour le même état de l'objet, à des incidences différentes, en synchronisant les jeux de mesures sur les cycles de l'objet. Comme les projections sont affectées par un bruit $b_k$ et comme on appelle $w_k$ un bruit qui représente l'erreur de l'opérateur de déformation, on peut écrire la paire d'équations suivante :

$$\begin{cases} f_k = D_k f_0 + w_k \\ m_k = R f_k + b_k \end{cases}, \qquad (2)$$

en appelant $f_k$ et $f_0$ les images réelles de l'objet aux états k et 0, et R la matrice de projection des mesures.

Selon l'invention, on fait entrer les jeux de mesures les uns après les autres dans les calculs pour reconstruire à chaque fois une estimation de l'image, notée $\hat{f}_0^{k+1}$ quand l'état k+1 a été considéré, et tenter de l'améliorer et l'approcher de $f_0$. Concrètement, on applique l'équation :

$$\hat{f}_0^{k+1} = \hat{f}_0^{k} + K_{k+1}\varepsilon_{k+1}. \qquad (3)$$

Cette formulation du problème fait apparaître plusieurs nouvelles grandeurs définies de la façon suivante :

$$K_{k+1} = P_k D_{k+1}^t R^t P_{\varepsilon_{k+1}}^{-1},$$

$$\text{avec} \quad P_{k+1} = P_k\left(I - D_{k+1}^t R^t P_{\varepsilon_{k+1}}^{-1} R D_{k+1} P_k\right) \qquad (4)$$

$$\text{et} \quad P_{\varepsilon_{k+1}} = R D_{k+1} P_k D_{k+1}^t R^t + R C_{w_{k+1}} R^t + C_{b_{k+1}};$$

$$\text{et} \quad \varepsilon_{k+1} = m_{k+1} - R D_{k+1}\hat{f}_0^{k}$$

$P_k$ désigne une matrice d'estimation de l'erreur entre l'estimation d'image obtenue $\hat{f}_0^{k+1}$ et l'image réelle $f_0$. $P_k$ est calculé par récurrence pour chaque jeu de projections à partir d'une valeur primitive $P_{-1}$ introduite arbitrairement par l'opérateur et qui est en pratique formée d'une matrice dont les coefficients sont tous très grands. $P\varepsilon_{k+1}$ désigne la matrice exprimant le bruit entre l'estimation d'image précédente $\hat{f}_0^{k}$ (une fois déformée à l'état k+1 par l'opérateur $D_{k+1}$ et projetée) et le jeu de projections $m_{k+1}$ correspondant à l'état k+1. Les matrices $Cb_k$ et $Cw_k$ désignent les matrice de covariance des bruits $b_k$ sur les projections et $w_k$ sur l'opérateur de déformation comme ils ont été définis ci-dessus. Ces bruits ne sont pas connus en pratique et doivent être estimée par l'opérateur d'après son expérience et ses observations. Le bruit $b_k$ peut être évalué sur chaque image de projections par une analyse de densité spectrale en considérant les hautes fréquences et en supposant le bruit blanc. On rappelle enfin que la matrice de covariance d'un phénomène X de moyenne $\bar{X}$ (exprimé sous forme matricielle) est définie par

$$C(X) = E(X - \bar{X})^t.(X - \bar{X}) \qquad (5),$$

où E désigne l'espérance statistique. Enfin, la lettre t en indice renvoie à la transposée de matrice.

Ce procédé revient à appliquer à chaque récurrence une régularisation au sens de Tikhonov tel que $\hat{f}_0^{k+1}$ minimise la fonction de coût

$$E(f) = \Delta_1^{k+1} + (R D_{k+1} f, m_{k+1}) + \Delta_2^{k+1}(f, \hat{f}_0^{k}) \qquad (6)$$

où :

$$\Delta_1^{k+1}(x, y) = (x - y)^t(R C_{w_{k+1}} R^t + C_{b_{k+1}})^{-1}(x - y)$$

$$\Delta_2^{k+1}(x, y) = (x - y)^t P_k^{-1}(x - y) \qquad (7)$$

où $\Delta_1$ et $\Delta_2$ sont des normes qui expriment l'écart entre les mesures et la solution trouvée et l'écart entre la solution $f_0$ et l'image reconstruite $f_0^k$.

L'accomplissement de tous ces calculs impose de trouver l'opérateur de déformation $D_{k+1}$. On utilise pour cela l'estimation d'image précédemment obtenue $f_0^k$ et une image brute $\tilde{r}^{k+1}$ de l'objet à l'état k+1 à l'aide des projections $m_{k+1}$ qui viennent d'être prises en considération, en utilisant un algorithme usuel de reconstruction d'image tridimensionnelle dit de rétroprojection des projections filtrées. On rappelle qu'on dispose de L jeux de $M^2$ mesures pour chaque état, ce qui permet de reconstituer l'image brute $\tilde{r}^{k+1}$. La comparaison entre l'image brute à l'état k+1 $\tilde{r}^{k+1}$ dans laquelle on discerne la forme et la position de l'objet recherché et l'estimation d'image actuelle $f_0^k$ de l'objet à l'état 0 avec les jeux de mesures des états 0 à k permet de déduire cet opérateur de déformation $D_{k+1}$. Cette étape, qui est une des plus caractéristiques de l'invention, est décrite dans les lignes qui viennent.

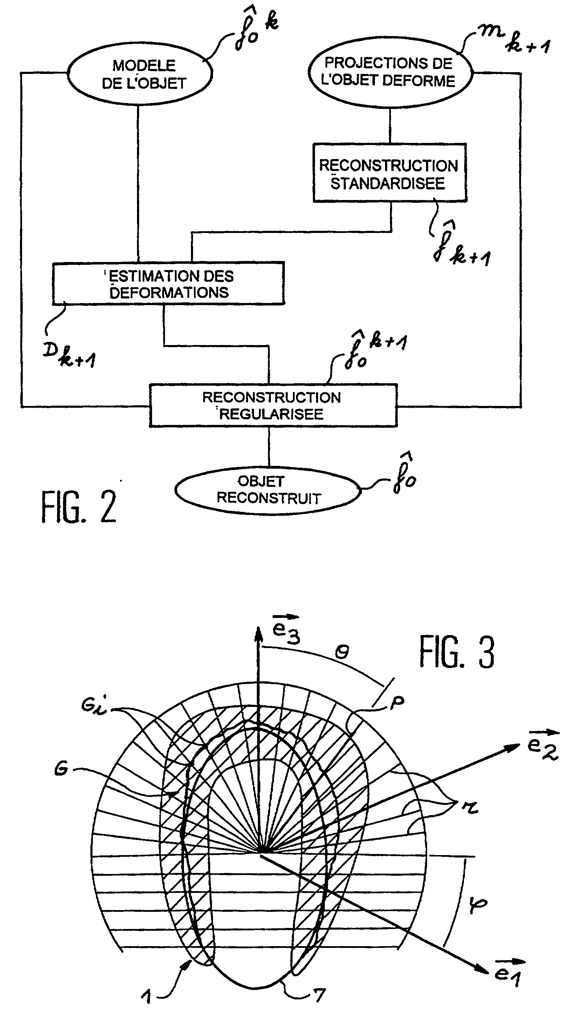

Ensuite, l'estimation d'image suivante de l'objet $f_0^{k+1}$ est reconstruite à partir de l'estimation d'image actuelle $f_0^k$, du jeu de projections $m_{k+1}$ et de l'opérateur de déformation $D_{k+1}$ en appliquant les équations précédentes. On se rapproche ainsi pas à pas vers l'image réelle $f_0$, pour obtenir une image finale $f_0$ représentative de l'état 0. La figure 2 résume le procédé.

On va donc examiner plus concrètement comment définir l'opérateur des déformations $D_k$ dans le cas particulier de l'examen du myocarde. Comme on le verra, le choix de l'objet ou de l'organe tend à imposer une schématisation de sa forme pour le modéliser et mener les calculs commodément, mais d'autres modélisations seront immédiatement envisagées pour d'autres organes.

Dans le cas d'un procédé (TEMP) de tomographie d'émission mono-photonique, généralement employé pour étudier le fonctionnement d'un organe et où un produit radioactif est administré à cet organe, le procédé classique pour l'isoler sur l'image brute, reconstituée directement, $\tilde{r}^{k+1}$ consiste tout d'abord à sélectionner manuellement une portion de l'image qui l'englobe, puis à écarter les parties étrangères de l'image qui subsistent par un critère de seuil d'activité : plus précisément, on écarte les parties dont l'activité est inférieure à une proportion, généralement de 35%, de l'endroit d'activité maximale. Il peut subsister alors, à côté de l'organe lui-même, des objets résiduels de plus petite taille qu'on écarte ensuite, ce qui élimine les fausses détections associées au bruit et aux artéfacts de reconstruction. On peut ainsi éliminer automatiquement les objets dont la taille, mesurée d'après leur surface sur l'image, est inférieure à 30% de la taille de l'objet principal.

Dans le cas où on peut considérer que l'activité d'émission globale par image reste constante au cours du temps, l'équation de continuité :

$$\frac{\partial a}{\partial t} + \triangledown.(a \vec{v}) = 0,$$

fréquemment rencontrée en mécanique des milieux continus et mécanique des fluides, est respectée, a(M,t) et $\vec{v}$(M, t) désignant la densité d'activité d'émission et la vitesse de l'objet en un point M et à un instant t. $\triangledown$ désigne l'opérateur de divergence. On appelle $V_k$ le champ des mouvements $\vec{v}_k$ (M des points M de l'objet de l'état d'origine (k=0) à l'état k. Il est possible de décomposer ce mouvement par l'équation :

$$\vec{v}(M) = \vec{v}(C) + \vec{\Omega} \wedge C \vec{M} + \vec{D}(M) \tag{8}$$

où C est le centre d'inertie de l'objet (le myocarde), $\vec{v}$(C et $\vec{\Omega}$ les composantes de translation et de rotation du torseur du champ de mouvement rigide de l'objet et $\vec{d}$(M) le mouvement non rigide exprimé dans un référentiel lié à l'objet, c'est-à-dire les déformations proprement dites.

Dans le cas du myocarde, ce référentiel a pour origine et pour axes directeurs le centre C et les axes principaux d'un ellipsoïde servant à modéliser la surface barycentrique du myocarde entre ses surfaces interne et externe (endocarde et péricarde). Cette surface peut être définie en coordonnées sphérique pour la pointe du coeur (appelée apex) et cylindrique pour la base du coeur ; ce système de coordonnées est noté $(\rho, \varphi,.)$ par l'équation :

$$\rho G(\phi G,.) = \frac{\int_0^{\rho max} a(\rho, \phi G,.)\rho d\rho}{\int_0^{\rho max} a(\rho, \phi G,.)d\rho} \tag{9}$$

où a($\rho$,$\phi$G,.) désigne l'activité d'émission au point de coordonnée ($\rho$,$\phi$G,.) et $\rho$max désigne la distance maximale de scrutation. Pour toute coordonnée angulaire ($\phi$G,.), le point de la surface barycentrique a donc comme coordonnée radiale $\rho$G.

Cette méthode semble plus exacte que d'autres si le coeur présente un défaut de vascularisation et en particulier que les méthodes fondées sur la recherche des moments principaux d'inertie. En effet, les défauts d'activités qui apparaissent alors peuvent plus facilement perturber les résultats des calculs.

On a représenté sur la figure un myocarde vu en coupe, l'ellipsoïde apte à modéliser la surface barycentrique et le myocarde pour les besoins d'estimation de son mouvement d'ensemble, et l'échantillonnage retenu, qui est hémisphérique du côté de la pointe du myocarde et cylindrique du côté de sa base. Pour cette partie, les rayons de détermination de la surface barycentrique G sont tous parallèles. Ces rayons le long desquels les points Gi sont déterminés sont tous notés par r.

On commence donc par calculer les points Gi de coordonnées $x_i, y_i$ et $z_i$ de la surface barycentrique G à l'aide de la formule donnée ci-dessus, puis on calcule les paramètres de l'ellipsoïde 7 le plus proche de cette surface en définissant la fonction d'erreur :

$$\sum_{i=1}^{N} (1 - \Gamma(x_i, y_i, z_i))^2 \qquad (10)$$

où N désigne le nombre des points $G_i$ de la surface barycentrique G et $\Gamma(x,y,z)$ est l'équation d'un ellipsoïde, soit

$$\Gamma(x,y,z)=a_0 x^2+a_1 y^2+a_2 z^2+a_3 xy+a_4 xz+a_5 yz+a_6 x+a_7 y+a_8 z=1 \qquad (11).$$

On résout le système obtenu pour obtenir les coefficients $a_0$ à $a_8$ jusqu'à obtenir le minimum de cette fonction d'erreur ; un nouveau référentiel est associé à l'ellipsoïde obtenu, qui implique d'autres rayons de scrutation et de calcul des coordonnées des points $G_i$ ; en pratique, on recommence le procédé par itérations successives jusqu'à ce que les variations de position et d'orientation des axes du référentiel associé à l'ellipsoïde 7, et qui découlent des coefficients $a_0$ à $a_8$, deviennent insensibles compte tenu de la résolution de l'image. Pour la première itération l'ellipsoïde 7 et le référentiel associé sont obtenus en résolvant l'équation d'erreur avec tous les points de l'image du myocarde, en l'absence de rayons permettant de calculer une surface barycentrique.

Les axes dessinés sur la figure sont alors obtenus. L'axe $\vec{e}_3$ est toujours dirigé dans le grand axe de l'ellipsoïde vers la pointe du myocarde. L'origine C est le centre de l'ellipsoïde.

Une fois que le référentiel a été calculé pour l'image k, le mouvement global de translation entre les états 0 et k est défini par le vecteur $C^0 C^k$ et la matrice de rotation est calculée par le produit des composantes des deux vecteurs

$$\left[\vec{e}_1^k, \vec{e}_2^k, \vec{e}_3^k\right]^t \cdot \left[\vec{e}_1^0, \vec{e}_2^0, \vec{e}_3^0\right].$$

Le mouvement non rigide peut être estimé à partir des contours du myocarde et de la surface barycentrique G. Une modélisation moins schématique du myocarde est désormais utilisée : l'endocarde et le péricarde sont modélisés par des surfaces en balle de fusil, c'est-à-dire demi-ellipsoïdales de révolution à l'extrémité et cylindriques de révolution à la base. La position de ces surfaces est effectuée en recherchant les paramètres de ces surfaces qui permettent de maximiser l'intégrale sur ces surfaces de la norme quadratique du gradient de la propriété d'émission. Cela provient de ce que, comme seul l'organe émet les photons, la variation d'émission est la plus forte en traversant ses surfaces interne et externe, et on cherche donc les surfaces de forme simple qui vérifient au mieux cette propriété. Les paramètres nécessaires à définir les deux surfaces en balle de fusil sont au nombre de cinq (la hauteur des cylindres et les mesures des ellipsoïdes aux axes principaux).

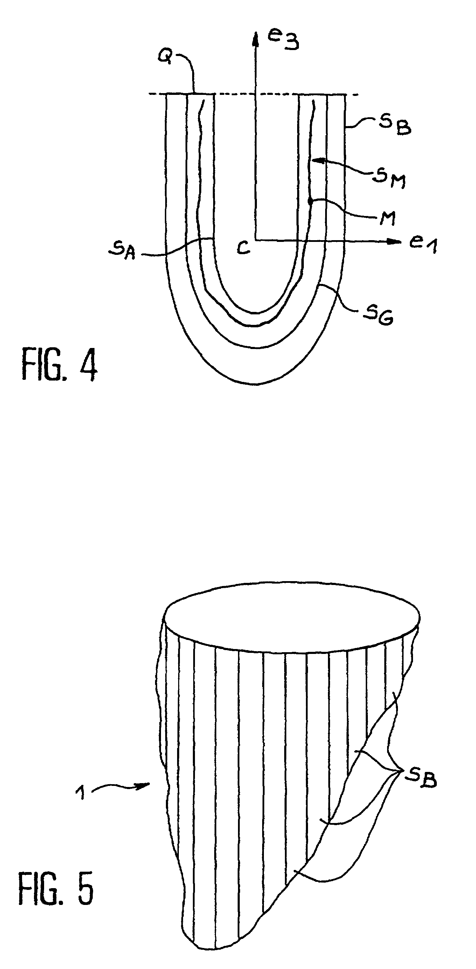

Si on appelle a la demi-mesure des ellipsoïdes selon leurs petits axes (perpendiculairement à $\vec{e}_3$), c leur demi-mesure selon leur grand axe $\vec{e}_3$, A l'indice de l'endocarde, B l'indice du péricarde et h la hauteur des cylindres, les calculs sont menés en faisant varier $a_A$, $a_B$, $c_B$, et on établit par convention $c_A=1{,}5a_A$ car on constate que ce paramètre est difficile à calculer. De même, le paramètre h ne peut pas être obtenu facilement directement. Pour cela,

l'image brute $\tilde{r}^{k+1}$ est décomposée en coupes passant par l'axe $\vec{e}_3$, où $\varphi$ est constant, et on mesure pour chacune de ces coupes le gradient de l'activité le long de la surface comprise entre les courbes $S_A$ et $S_B$ modélisant l'endocarde et le péricarde. Le plan Q auquel le cylindre s'arrête correspond au gradient maximal de l'activité, sommée sur toutes les coupes. Tout cela est représenté à la figure 4.

Il est alors possible de définir complètement une modélisation $S_G$ de la surface barycentrique G qui est une surface en balle de fusil définie par les équations :

$$S_G \begin{cases} \Gamma(x, y, z) = a_0 x^2 + a_1 y^2 + a_2 z^2 \text{ si } z \geq 0 \\ \Gamma(x, y, z) = a_0 x^2 + a_1 y^2 \text{ si } -h \leq z \leq 0. \end{cases} \quad (12)$$

A chaque point M du myocarde, on peut faire correspondre une surface en forme de balle de fusil intermédiaire à $S_A$ et $S_B$ et définie par de nouveaux paramètres a et c ; h restant identique. Après une déformation de dilatation ou de contraction, le point M, de coordonnées x, y et z, devient un point M' de coordonnées x', y' et z' présent sur une surface de même forme et définie par les paramètres a', c' et h' tels que :

$$x'=(a'/a)x, \quad y'=(a'/a)y \quad \text{et} \quad z'=[(c'+h')/(c+h)]z. \quad (13)$$

En modélisant -comme illustré à la figure 5- le myocarde déformé comme une superposition de tranches en forme de balles de fusil dilatées inégalement, les déplacements de déformation du point M entre les états 0 et k+1 suivant les trois axes peuvent être exprimés par les formules suivantes :

$$d(M) \begin{cases} d(x) = \left( \dfrac{a'}{a} - 1 \right) x \\ d(y) = \left( \dfrac{b'}{b} - 1 \right) y \\ d(z) = \left( \dfrac{c'+h'}{c+h} - 1 \right) z \end{cases} \quad (14)$$

De façon plus précise, les coefficients a, b et c associés au point M obéissent à des relations de proportionnalité avec les coefficients de même nom de la surface barycentrique d'une part, et de la surface modélisant soit l'endocarde, soit le péricarde d'autre part. Les coefficients a', b' et c' associés au pont M' obéissent aux mêmes relations avec les coefficients des mêmes surfaces de modélisation à l'état déformé.

Il faut ajouter à ces déformations les déplacements d'ensemble pour obtenir le mouvement complet en chaque point du myocarde.

L'étape suivante consiste à définir l'opération des déformations $D_{k+1}$ entre l'état 0 et l'état k+1. Aucun état intermédiaire n'intervient dans le calcul, ce qui réduit les erreurs numériques. L'activité à l'état k+1 du point M(x,y,z), soit a(M,k+1), est égale à la somme des activités des points $M_i$ à l'état 0, $a(M_i,0)$ qui arrivent au voisinage de M après un mouvement complet de coordonnées $v_x(M)$, $v_y(M)$ et $v_z(M)$ de M, avec une pondération selon la formule :

$$a(M, k + 1) = \Sigma \, \alpha_i a(M_i, 0)$$

et

$$\alpha_i = (1 - \varepsilon_{ix})(1 - \varepsilon_{iy})(1 - \varepsilon_{iz})$$

$$\text{où}\begin{cases}\varepsilon_{ix} = \left|x - (x_i + v_x(M_i)\right| \text{si} \left|x - (x_i + v_x(M_i)\right| \leq 1;0 \text{ sinon}\\[2mm]\varepsilon_{iy} = \left|y - (y_i + v_y(M_i)\right| \text{si} \left|y - (y_i + v_y(M_i)\right| \leq 1;0 \text{ sinon}\\[2mm]\varepsilon_{iz} = \left|z - (z_i + v_z(M_i)\right| \text{si} \left|z - (z_i + v_z(M_i)\right| \leq 1;0 \text{ sinon}\end{cases} \quad (15)$$

Il faut remarquer que l'activité globale de l'objet est pratiquement identique pour chaque état. En effet, même si elle diminue à chaque mesure à cause de l'épuisement de la radioactivité, les états sont tous mesurés plusieurs fois à des instants successifs, et les mesures des différents états sont entremêlées si bien que certaines sont précoces et d'autres sont tardives pour chacun d'eux. C'est en ce sens que l'équation de continuité est respectée dans ce procédé.

D'autres modes d'obtention des mouvements des points de l'objet sont concevables, bien que celui-ci paraisse actuellement le meilleur. Un autre est décrit dans l'article "Computation of 3-D velocity fields from 3-D cine CT images of a human heart" par Song et Leahy, paru dans IEEE transactions on medical imaging, vol. 10, n° 3, septembre 1991, pp. 295-306.

Le calcul de l'image $\hat{f}_0^{k+1}$ implique l'inversion de la matrice $P\varepsilon_{k+1}$, conformément à la formule rencontrée plus haut qui donnait $K_{k+1}$. Cette matrice de très grande taille ne peut pas être inversée directement en général. Un autre procédé est alors utilisé.

On montre que, sous les hypothèses précédentes, $(f_0 - \hat{f}_0^{k+1})$ et $\varepsilon_{k+1}$ sont des vecteurs aléatoires de moyenne nulle et dont les matrices de covariance sont $P_{k+1}$ et $P\varepsilon_{k+1}$. Ces matrices de covariance peuvent être approchées par des matrices-blocs circulantes qui peuvent être diagonalisées selon les formules suivantes :

$$\begin{aligned}P\varepsilon_{k+1} &= \mathcal{W}_m \mathscr{P}\varepsilon_{k+1}\mathcal{W}_m^{-1}\\ P_{k+1} &= \mathcal{W}_0 \mathscr{P}_{k+1}\mathcal{W}_0^{-1}\end{aligned} \quad (16)$$

$\mathcal{W}_m$ est une matrice de dimensions $LM^2 \times LM^2$ telle que :

$$\mathcal{W}_m = \begin{pmatrix} W_m & \cdots & 0 \\ \vdots & \ddots & \vdots \\ 0 & \cdots & W_m \end{pmatrix} \quad (17)$$

$W_m$ est une matrice carrée de dimensions $M^2 \times M^2$ telle que si X représente une image bidimensionnelle à $M^2$ points, le produit $W_m^{-1}X$ est la transformée de Fourier discrète bidimensionnelle de X ; $\mathscr{P}\varepsilon_{k+1}$ est une matrice-blocs diagonale dont chaque bloc est une matrice diagonale de dimensions $M^2 \times M^2$ dont les éléments diagonaux sont les densités spectrales du bruit entre les projections et le calcul de celles-ci à partir des déformations et de l'estimation d'image, de valeur $m_{k+1} - RD_{k+1}\hat{f}_0^k$ ; $W_0$ est une matrice de dimensions $M^3 \times M^3$ telle que si X représente une image tridimensionnelle de $M^3$ points, $W_0^{-1}X$ est la transformée de Fourier discrète tridimensionnelle de $X_i$ ; et $\mathscr{P}_{k+1}$ est une matrice diagonale dont les éléments diagonaux sont les densités spectrales de l'erreur d'estimation

$$\left(f_0 - \hat{f}_0^{k+1}\right).$$

Dans ces conditions, le produit $K_{k+1}\varepsilon_{k+1}$ est à $W_0 P_k W_0^{-1} D_{k+1}^t R^t W_m P\varepsilon_{k+1}^{-1} W_m^{-1}\varepsilon_{k+1}$ (18).

Comme le myocarde est à peu près incompressible, le produit $D_k D_k^t$ est proche de la matrice d'identité. On obtient finalement, pour un faisceau de projections parallèles, l'équation suivante à partir de $\hat{f}_0^{k+1} = \hat{f}_0^k + K_{k+1}\varepsilon_{k+1}$, en exploitant les propriétés de l'opération de projection R et des opérateurs $W_m$ et $W_0$ :

$$\hat{f}_0^{k+1} = \hat{f}_0^k + D_{k+1}^{-1}R^t\Phi_{k+1}\left(m_{k+1} - RD_{k+1}\hat{f}_0^k\right) \quad (19)$$

où $R^t$ et $\Phi_{k+1}$ désignent respectivement une rétroprojection et un banc de L filtres monodimensionnels dont chacun est défini par une fonction de transfert indépendante de l'angle de projection noté 1 ; cette fonction est définie par :

$$\Phi_{K+1}^l(v) = \frac{\Gamma_k(v)}{\Gamma_{\varepsilon_{k+1}}(v)}, \quad (20)$$

où $\Gamma_k(v)$ et $\Gamma\varepsilon_{k+1}(v)$ désignent les densités spectrales de $\mathscr{P}_k$ et $\mathscr{P}\varepsilon_{k+1}$ ; de plus,

$$\Gamma_{k+1}(v) = \Gamma_k(v)\left(1 - \frac{\Gamma_k(v)}{|v|S_{\varepsilon_{k+1}}(v)}\right) \quad (21)$$

et

$$\Gamma\varepsilon_{k+1}(v) = \frac{\Gamma_k(v)}{|v|} + \frac{\Gamma w_{k+1}(v)}{|v|} + \Gamma b_{k+1}(v) ,$$

$\Gamma w_{k+1}$ et $\Gamma b_{k+1}$ désignant les densités spectrales de $w_{k+1}$ et $b_{k+1}$.

En pratique et compte tenu des propriétés de l'opération de projection R et de symétrie de révolution de $\Phi_{k+1}^l(v)$, l'équation précédente revient à

$$\hat{f}_0^{k+1} = (1 - \Psi_{k+1})\hat{f}_0^k + D_{k+1}^{-1}R^t\Phi_{k+1}m_{k+1}$$

avec

$$\Psi_{k+1}\left(v_x, v_y, v_z\right) = \frac{\Phi_{k+1}^\ell\left(\sqrt{v_x^2 + v_y^2}\right)}{\sqrt{v_x^2 + v_y^2}} \quad (22) \; ;$$

et le procédé effectif de reconstruction est accompli en résolvant cette dernière équation.

En résumé, à chaque itération k+1, les mesures $m_{k+1}$ sont filtrées par le filtre de fonction de transfert $\Phi_{k+1}^l$ traduisant la confiance en ces données et en l'estimation des déformations, puis rétroprojetées et déformées par l'opérateur $D_{k+1}^{-1}$ afin d'être recalées sur l'état 0 dont l'image est restaurée. Cette image $f_0^{k+1}$ est alors la somme des mesures filtrées reconstruites et déformées et du modèle filtré par le filtre de fonction de transfert $(1-\Psi_{k+1})$ opérant une pondération entre les mesures et les informations a priori. Les filtres $\Phi$ et $\Psi$ sont actualisés en fonction des bruits des jeux de mesures et des modélisations des déformations. Le processus est initialisé avec $f_0^{-1} = 0$ et $\mathscr{E}_1 = \sigma_{-1}^2 I$ où $\sigma_{-1}$ est un très grand nombre, assimilable à l'infini.

L'état de référence correspondant à la solution $f_0$ est librement choisi. Il peut correspondre à un état effectif de prises de mesures ou à un état conventionnellement choisi tel qu'un état primitif défini par une modélisation et inaccessible désormais. Il est d'ailleurs possible de changer d'avis et de remplacer finalement l'image obtenue définitivement $f_0$ en se servant encore de l'opérateur de déformations $D_k$.

Les essais préliminaires ont démontré que la combinaison d'informations d'images de l'objet à des états différents, caractéristique de l'invention, donnait des images beaucoup plus nettes que les reconstructions classiques où seules des mesures synchronisées sur un état unique de l'objet étaient prises ; en d'autres termes, l'image $\hat{f}_0^k$ est meilleure que $f_0$ (ou $f_0^0$), d'autant plus que k est plus grand.

Mais le nombre d'états peut être quelconque ; l'invention peut même être employée avec profit pour un seul état de prises de mesures, à condition de disposer d'informations de départ associées à un état de référence ; l'image reconstruite, enrichie de ces informations, peut avantageusement être rendue dans l'état de prise de mesures, car elle est normalément plus précise que l'image brute $\tilde{f}_0$.

Une application différente de la médecine, à laquelle s'appliquent volontiers certaines des remarques précédentes, concerne les contrôles non destructifs de l'industrie où les états de prises de mesures sont des états déformés et l'état de référence un état défini par des plans ou une modélisation, indemne de déformation.

## Revendications

1. Procédé de reconstruction d'images tridimensionnelles d'un objet, comprenant une prise d'une série de jeux de mesures (m) d'une propriété caractéristique de l'objet (1) par un réseau bidimensionnel (2) de capteurs (3) mobile autour de l'objet, les jeux de mesures (m) consistant en un réseau bidimensionnel de projections (p) de la propriété sur les capteurs, les jeux de mesures étant pris à un groupe d'états (k) différents de l'objet en ce qui concerne des variations de position ou de forme de l'objet, **caractérisé en ce qu'**il consiste, après avoir défini un état de référence de l'objet :

   - à obtenir un groupe d'image brutes ( $\tilde{f}$ ) de l'objet auxdits états de l'objet en utilisantles jeux de mesures (m),
   - à évaluer les variations ($\Delta$) de l'objet entre l'état de référence et lesdits états de l'objet au moyen desdites images brutes ( $\tilde{f}$ ),
   - à corriger successivement, pour chacun des états (k+1) de l'objet, une image estimée de l'objet

$$\left(\hat{f}_o^k\right)$$

   à l'état de référence d'après la variation

$$\left(\Delta^{k+1}\right)$$

   de l'objet entre l'état de référence et ledit état (k+1) et d'après les jeux de mesures ($m_{k+1}$).

2. Procédé de reconstruction d'images tridimensionnelles d'un objet selon la revendication 1, **caractérisé en ce que en ce que** les variations de l'objet sont estimées par un champ de déplacement de points de modélisation (M) de l'objet et par une évolution de la propriété respectant une relation de continuité de la propriété dans le temps.

3. Procédé de reconstruction d'images tridimensionnelles d'un objet selon l'une quelconque des revendications 1 ou 2, **caractérisé en ce que** les variations de l'objet sont estimées par des variations de contours de l'objet modélisés par des formes géométriques simples ($S_A$, $S_B$) et de nature invariable.

4. Procédé de reconstruction d'images tridimensionnelles d'un objet selon la revendication 3, **caractérisé en ce que** l'objet est modélisé sous forme de points (M) présents sur des formes géométriques simples ($S_M$) et de nature invariable et semblable à celle des formes géométriques de modélisation des contours.

5. Procédé de reconstruction d'images tridimensionnelles d'un objet selon l'une quelconque des revendications 3 ou 4, **caractérisé en ce que** l'objet est un myocarde (1) modélisé par une demi-sphère prolongée par un cylindre à l'état de référence et par une empilement de tranches de modélisation composées chacun d'un demi-ellipsoïde prolongé par un . cylindre aux états des images brutes.

6. Procédé de reconstruction d'images tridimensionnelles d'un objet selon l'une quelconque des revendications 1 à 5, **caractérisé en ce que** l'objet est sujet à la fois à des déformations et à des déplacements d'ensemble, et **en ce que** les déformations et les déplacements d'ensemble sont évalués séparément avec des modélisations différentes de l'objet.

**7.** Procédé de reconstruction d'images tridimensionnelles d'un objet selon l'une quelconque des revendications 1 à 6, **caractérisé en ce que** l'image estimé de l'objet

$$\left(\hat{f}_o^k\right)$$

à l'état de référence est corrigée d'après aussi des évaluations de bruitage (b,m) des mesures (m) et des variations ($\Delta$) évaluées de l'objet.

**8.** Procédé de reconstruction d'images tridimensionnelles d'un objet selon l'une quelconque des revendications 1 à 7, **caractérisé en ce que** les jeux de mesure sont combiné en tenant compte de bruitages (b, w) des mesures et de bruitages des évaluations des variations de l'objet.

**9.** Procédé de reconstruction d'images tridimensionnelles d'un objet selon l'une quelconque des revendications 1 à 8, **caractérisé en ce que** l'objet est supposé incompressible.

**Patentansprüche**

**1.** Dreidimensionales Bildrekonstruktionsverfahren eines Objekts, eine Aufnahme einer Serie von Maßsätzen bzw. Sätzen von Maßen (m) einer charakteristischen Eigenschaft des Objekts (1) durch ein zweidimensionales Gitter (2) von Sensoren (3) umfassend, die um das Objekt herum beweglich sind, wobei die Sätze von Maßen (m) durch ein zweidimensionales Gitter von Projektionen (p) der Eigenschaft auf die Sensoren gebildet werden, die Sätze von Maßen bzw. Maßsätze bei einer Gruppe von verschiedenen Zuständen (k) des Objekts aufgenommen werden, die Positions- oder Formveränderungen des Objekts betreffen,
**dadurch gekennzeichnet,**
**dass** es, nachdem ein Bezugszustand des Objekt definiert worden ist, darin besteht:

- eine Gruppe von Rohbildern ($\widetilde{f}$) von dem Objekt in den genannten Zuständen des Objekts zu erstellen, indem die Maßsätze bzw. Sätze von Maßen (m) benutzt werden,
- die Veränderungen ($\Delta$) des Objekts zwischen dem Bezugszustand und den genannten Zuständen des Objekts mittels der genannten Rohbilder ($\widetilde{f}$) zu bewerten,
- nacheinander, für jeden der Zustände (k+1) des Objekts, ein bewertetes Bild des Objekts ($\hat{f}_0^k$) im Bezugszustand gemäß der Veränderung $(\Delta^{k+1})$ des Objekts zwischen dem Bezugszustand und dem genannten Zustand (k+1) und gemäß den Sätzen von Maßen ($m_{k+1}$) zu korrigieren.

**2.** Dreidimensionales Bildrekonstruktionsverfahren eines Objekts nach Anspruch 1, **dadurch gekennzeichnet, dass** die Veränderungen des Objekts durch ein Verschiebungsfeld von Modellierungspunkten (M) des Objekts und durch eine Entwicklung der Eigenschaft bewertet werden, die eine Kontinuitätsrelation der Eigenschaft in der Zeit berücksichtigt.

**3.** Dreidimensionales Bildrekonstruktionsverfahren eines Objekts nach einem der Ansprüche 1 oder 2, **dadurch gekennzeichnet, dass** die Veränderungen des Objekts durch Veränderungen der Konturen des Objekts bewertet werden, die durch einfache geometrische Formen ($S_A$, $S_B$) von unveränderlicher Art modelliert werden.

**4.** Dreidimensionales Bildrekonstruktionsverfahren eines Objekts nach Anspruch 3, **dadurch gekennzeichnet, dass** das Objekt in Form von Punkten (M) modelliert wird, vorhanden in geometrischen Formen ($S_M$), die einfach und von unveränderlicher Art sind und denen der geometrischen Modellierungsformen der Konturen ähnlich sind.

**5.** Dreidimensionales Bildrekonstruktionsverfahren eines Objekts nach einem der Ansprüche 3 oder 4, **dadurch gekennzeichnet, dass** das Objekt ein Herzmuskel (1) ist, modelliert - im Bezugszustand - durch eine mittels eines Zylinders verlängerte Halbsphäre und - in den Zuständen der Rohbilder - durch einen Stapel von Modellierungsschichten, von denen jede durch einen mittels eines Zylinders verlängerten Halb-Ellisoiden gebildet wird.

**6.** Dreidimensionales Bildrekonstruktionsverfahren eines Objekts nach einem der Ansprüche 1 bis 5, **dadurch gekennzeichnet, dass** das Objekt zugleich Verformungen und Gesamtverschiebungen unterworfen ist bzw. wird, und dass die Verformungen und die Gesamtverschiebungen getrennt bewertet werden, mit unterschiedlichen Modellierungen des Objekts.

7. Dreidimensionales Bildrekonstruktionsverfahren eines Objekts nach einem der Ansprüche 1 bis 6, **dadurch gekennzeichnet, dass** das bewertete Bild des Objekts ($f_0^k$) im Bezugszustand auch nach den Geräuschbewertungen (b,m) der Maße (m) und den bewerteten Veränderungen (Δ) des Objekts korrigiert wird.

8. Dreidimensionales Bildrekonstruktionsverfahren eines Objekts nach einem der Ansprüche 1 bis 7, **dadurch gekennzeichnet, dass** die Maßsätze kombiniert werden, indem Geräusche (b, w) der Messungen und Geräusche der Bewertungen der Veränderungen des Objekts berücksichtigt werden.

9. Dreidimensionales Bildrekonstruktionsverfahren eines Objekts nach einem der Ansprüche 1 bis 8, **dadurch gekennzeichnet, dass** davon ausgegangen wird, dass das Objekt nicht zusammendrückbar ist.

**Claims**

1. Process for the reconstruction of three-dimensional images of an object comprising taking a series of sets of measurements (m) of a characteristic property of the object (1) by a two-dimensional array (2) of sensors (3) mobile around the object, the sets of measurements (m) consisting of a two-dimensional array of projections (p) of the property on the sensors, the sets of measurements being made with a group of different states (k) of the object with regards to variations in the position or shape of the object, **characterized in that** it consists, after defining a reference state of the object, of obtaining a group of approximate images () of the object at said states of the object using the measurement sets (m), evaluating the variation (Δ) of the object between the reference state and said states of the object by means of said approximate images ($\tilde{f}$), successively correcting, for each of the states (k+1) of the object, an estimated image of the object ($f_0^k$) at the reference state on the basis of the variation ($\Delta^{k+1}$) of the object between the reference state and said state (k+1) and on the basis of the sets of measurements ($m_{k+1}$).

2. Process for the reconstruction of three-dimensional images of an object according to claim 1, **characterized in that** the object variations are estimated by a displacement field of modelling points (M) of the object and by an evolution of the property respecting a continuity relation of the property in time.

3. Process for the reconstruction of three-dimensional images of an object according to either of the claims 1 and 2, **characterized in that** the variations of the object are estimated by variations of contours of the object modelled by simple geometrical shapes ($S_A$, $S_B$) and of invariable nature.

4. Process for the reconstruction of three-dimensional images of an object according to claim 3, **characterized in that** the object is modelled in the form of points (M) present on simple geometrical shapes ($S_M$) and of invariable nature and similar to that of geometrical contour modelling shapes.

5. Process for the reconstruction of three-dimensional images of an object according to either of the claims 3 and 4, **characterized in that** the object is a heart muscle (1) modelled by a hemisphere extended by a cylinder in the reference state and by a stack of modelling portions, each formed by a half-ellipsoid extended by a cylinder in the approximate image states.

6. Process for the reconstruction of three-dimensional images of an object according to any one of the claims 1 to 5, **characterized in that** the object is subject both to deformations and to displacements of an overall nature and **in that** the deformations and displacements of an overall nature are evaluated separately with different modellings of the object.

7. Process for the reconstruction of three-dimensional images of an object according to any one of the claims 1 to 6, **characterized in that** the estimated image of the object ($f_0^k$) at the reference state is corrected also on the basis of noise evaluations (b, m) of the measurements (m) and evaluated variations (Δ) of the object.

8. Process for the reconstruction of three-dimensional images of an object according to any one of the claims 1 to 7, **characterized in that** the sets of measurements are combined taking account of noise effects (b, w) of the measurements and noise effects of the evaluations of variations of the object.

9. Process for the reconstruction of three-dimensional images of an object according to any one of the claims 1 to 8, **characterized in that** the object is assumed to be incompressible.

FIG. 1

EP 0 752 684 B1

EP 0 752 684 B1

$\widehat{f}_0{}^k$

MODELE
DE L'OBJET

PROJECTIONS DE
L'OBJET DEFORME

$m_{k+1}$

RECONSTRUCTION
STANDARDISEE

$\widehat{f}_{k+1}$

ESTIMATION DES
DEFORMATIONS

$D_{k+1}$

$\widehat{f}_0{}^{k+1}$

RECONSTRUCTION
REGULARISEE

OBJET
RECONSTRUIT

$\widehat{f}_0$

FIG. 2

FIG. 3

$\vec{e_3}$

$\theta$

$Gi$

$P$

$G$

$\vec{e_2}$

$r$

$\varphi$

$\vec{e_1}$

1          7

15

FIG. 4

FIG. 5